# EUROPÄISCHE PATENTSCHRIFT

(11) **EP 0 882 409 B1**
(45) Veröffentlichungstag und Bekanntmachung des Hinweises auf die Patenterteilung: **24.09.2003**
(21) Anmeldenummer: 98109534.2
(22) Anmeldetag: 26.05.1998
(51) Int. Cl.: A23L 1/304

(54) **Iod enthaltende Lebensmittelzubereitung**
Iodine containing food preparation
Aliment contenant de l'iode

(30) Priorität: 02.06.1997 DE 19723042
(43) Veröffentlichungstag der Anmeldung: 09.12.1998
(73) Patentinhaber: Thoma, Rudy, 12107 Berlin (DE); Lahr, Wolfgang, 10777 Berlin (DE)
(72) Erfinder: Thoma, Rudy, 12107 Berlin (DE)
(74) Vertreter: Schwabe - Sandmair - Marx

(56) Entgegenhaltungen:
- WO-A-91/04757
- CN-A- 1 128 111
- CN-A- 1 141 735
- DATABASE WPI Section Ch, Week 9804 Derwent Publications Ltd., London, GB; Class D13, AN 98-033578 XP002078196 & CN 1 136 084 A (ZHANG X)
- PATENT ABSTRACTS OF JAPAN vol. 015, no. 409 (C-0876), 18.Oktober 1991 & JP 03 168074 A (MASANORI SHINOZAKI), 19.Juli 1991,
- DATABASE WPI Section Ch, Week 9805 Derwent Publications Ltd., London, GB; Class D13, AN 98-042797 XP002078197 & CN 1 136 894 A (LI Z)

## Beschreibung

Die Erfindung betrifft feste oder flüssige Lebensmittelzubereitungen bestehend aus einem oder mehreren Süßstoffen und/oder Zuckeraustauschstoffen, denen Jod zugesetzt ist, sowie optional weiteren Stoffen, wie in Anspruch 1 definiert.

Stand der Technik ist die Verwendung von Süßstoffen oder Zuckeraustauschstoffen zum Süßen von Speisen und Getränken. Diese Stoffe werden sowohl bei der industriellen Zubereitung von Lebensmitteln als auch im Haushalt eingesetzt und werden von Personen verwendet, die entweder krankheitsbedingt oder wegen ihres Gesundheitsbewußtseins keinen Zucker verwenden dürfen oder möchten.

Süßstoffe und Zuckeraustauschstoffe im Sinne dieser Erfindung sind Stoffe, die aufgrund ihrer Süßkraft zum Süßen von Speisen und Getränken geeignet sind um Saccharose zum Süßen zu ersetzen und in der Regel deutlich geringere Nährwerte aufweisen als diese. Beispielhaft seien hier Saccharin, Aspartam und Cyclamat genannt Es sind aber auch alle anderen natürliche oder synthetische Süßstoffe bzw. Zuckeraustauschstoffe wie sie beispielsweise in (1) "Fiedler, Herbert P. Lexikon der Hifsstoffe für Pharmazie, Kosmetik und angrenzende Gebiete, Editio Cantor Verlag 1996" oder in (2) "Römpp Chemielexikon, Bd. 5 u. 6 (1992), Thieme Verlag" aufgeführt sind erfindungsgemäß einsetzbar.

Vorwiegend im Arzneimittelbereich werden singuläre Jodpräparate zur Therapie oder Prophylaxe von Schilddrüsenerkrankungen eingesetzt.

Jod stellt ein essentielles Spurenelement dar, das für die Aufrechterhaltung der menschlichen Gesundheit unentbehrlich ist. Nach der Empfehlung der Weltgesundheitsorganisation (WHO) beträgt der Mindestbedarf des Erwachsenen 150µg pro Tag; die tägliche Jodaufnahme sollte zwischen 150 bis 300 µg pro Tag liegen.

Umfangreiche Untersuchungen über die Jodversorgung der Bevölkerung in Deutschland beispielsweise haben ein tägliches Joddefizit zwischen 70 bis 190 µg ergeben (Tabelle 1) Der Jodmangel ist in ganz Deutschland, aber auch in anderen Regionen, bekanntermaßen ein gravierendes Emährungs- und Gesundheitsproblem. Der Gesetzgeber hat aus diesem Grund die Jodierung von Speisesalz zugelassen.
Jedoch wird durch die Verwendung von jodiertem Speisesalz die erforderliche Jodversorgung nicht erreicht. Statt der kalkulierten 20-40µg/Tag haben Jodsalzbenutzer lediglich eine um 7µg/Trag verbesserte Jodversorgung als Personen, die kein jodiertes Speisesalz benutzen. Dafür kann die Tatsache verantwortlich gemacht werden, daß beim Kochen das Jod zum Teil durch Sublimation verloren geht bzw. im Kochwasser verworfen wird. (3) P. Pfannenstiel, L.-A. Hotze Hrsg; Neue und vergessene Aspekte der Therapie von Jodmangelstrumen; Verhandlungsbericht des 14. Wiesbadener Schilddrüsengespräches, Februar 1996; pmi Verlagsgruppe"

Darüber hinaus ist es aus gesundheitlichen Gründen (Vorsorge und Therapie des Bluthochdrucks) angezeigt, mit Kochsalz sparsam umzugehen.

Es ist ein anhaltendes gesundheitspolitisches Bedürfnis, die Bevölkerung ausreichend mit Jod zu versorgen. Aufgabe war es bei der zugrunde liegenden Erfindung ein Mittel zu Finden, das die zuvor genannten Nachteile des jodierten Kochsalzes nicht aufzeigt und eine zuverlässige Jodversorgung im Rahmen der Empfehlungen der WHO bzw. der Deutschen Gesellschaft für Emährung (DGE) zuläßt.

**Tabelle 1:**

| *Empfehlenswerte Jodaufnahme und durchschnittliches Joddefizit der deutschen Bevölkerung. Angaben: Arbeitskreis Jodmangel* | | | |
|---|---|---|---|
| | Empfehlenswerte Jodaufnahme [µg/Tag] | Tatsächliche Jodaufnahme [µg/Tag] | Joddefizit [µg/Tag] |
| Säuglinge | 50 - 80 | | |
| Kinder 1-9 Jahre | 100 - 140 | 30 - 40 | 70 - 100 |
| Jugendliche und Erwachsene | 180 - 200 | 60 - 80 | 100 - 140 |
| Schwangere | 230 | | 150 - 190 |
| Stillende | 260 | | 150 - 190 |

Erfindungsgemäß wird Jod in Form von Jodsalzen wie Jodid oder Jodat, vorzugsweise als Natrium- oder Kaliumjodat eingesetzt. Es können aber auch organische Jodverbindungen natürlichen oder synthetischen Ursprungs wie Jod enthaltende Aminosäuren (beispielsweise Monojodtyrosin oder Dijodtyrosin) oder anorganische Jodverbindungen mineralischen oder synthetischen Ursprungs zum Einsatz kommen. Denkbar ist auch die Jodierung der Süßstoffe selbst durch Einbau des Jods in das Süßstoffmolekül.

Es wurde gefunden, daß es keine Verluste z.B. durch Sublimation von Jod gibt, wenn man Jodid oder Jodat oder andere organischen oder anorganischen Jodverbindungen in den erfindungsgemäßen Zubereitungen bestimmungsgemäß verwendet; sie also in einem Modell, das dem Zubereiten von Heißgetränken wie Tee oder Kaffee entspricht, bei 80° C in Wasser löst. Bringt man die Jodverbindungen in Getränke ein, wird die gesamte Menge des zugesetzten Jods vom Konsumenten aufgenommen, da solche Getränke in der Regel vollständig konsumiert werden und Verluste wie beim Kochen nicht auftreten, da die Sublimation nicht eintritt (siehe Tabelle 2) und ein Verwerfen wie mit dem Kochwasser nicht stattfindet. Dies wird auch durch das überraschende Ergebnis der Messung der Urin - Jodausscheidung über 48 Stunden bei einer Versuchsperson bestätigt, wonach die Jodausscheidung nach Einnahme von 132 µg lodid in einer Zubereitung entsprechend Beispiel 1 über 12 h verteilt im 48 h Sammelurin um 27,7% gegenüber dem Basiswert angestiegen ist, während bei der Verwendung von 6,6 g jodiertem Speisesalz, welches wie aus Beispiel 3 hervorgeht, die gleiche Menge Jodid enthielt, der Basiswert nur unwesentlich um 7% überschritten wurde.

**Tabelle 2:**

| *Messung des Gehaltes von 80°C heißen, wäßrigen Lösungen von Kaliumjodat und Kaliumjodid im Zeitverlauf mittels HPLC* | | |
|---|---|---|
| Zeit | Kaliumjodat gefunden % | Kaliumjodid gefunden % |
| 0 Min. | 100,1 | 100,2 |
| 15 Min | 100,4 | 99,7 |
| 30 Min | 99,9 | 100,1 |

Da die erforderlichen sehr geringen Mengen Jod, die zum Ausgleich des alimentären Joddefizits erforderlich sind, in einer einfachen Art und Weise dargereicht werden sollten, wurden diese Mengen erfindungsgemäß mit Süßstoffen und/oder Zuckeraustauschstoffen vermischt und in zum Süßen von Getränken geeignete Portionen verpreßt oder in Lösungen zubereitet. Diese Portionierung erlaubt gleichzeitig eine individuelle Dosierung für die verschiedenen Defizitmengen der Personengruppen aus Tabelle 1. Darüber hinaus wird das Verhältnis von Süßstoff bzw. Zuckeraustauschstoff so hoch gewählt, daß einerseits bei einem durchschnittlichen, bestimmungsgemäßen Gebrauch der Süßstoffe der alimentäre Jodmangel nahezu ausgeglichen werden kann, andererseits aber niedrig genug, daß es infolge der hohen Süßkraft, die die Aufnahme bei exzessivem Verbrauch durch hervorrufen von Widerwillen gegen Süßstoffgeschmack begrenzt, nicht zu erheblichen Überschreitung der Aufnahmeempfehlungen der WHO kommen kann.

Um dies zu erreichen zieht man für die Ausgestaltung der erfindungsgemäßen Zubereitungen zweckmäßiger Weise die relative Süßkraft der Süßstoffe / Zuckeraustauschstoffe bzw. die relative Süßkraft von Süßstoff- / Zuckeraustauschstoff-Mischungen zu Rohrzucker bzw. Saccharose heran. Geeignete Mengenverhältnisse für die erfindungsgemäße Anwendung ergeben sich, wenn die täglich erforderliche Jodmenge, die sich aus Tabelle 1 ergibt, in einer Menge von Süßstoff / Zuckeraustauschstoff oder Mischungen davon enthalten ist, die der relativen Süßkraft von 10 Gramm bis 300 Gramm Saccharose entspricht. Die Vorteilhafteste Ausgestaltung ist es, wenn die täglich zu supplementierende Jodmenge in der der relativen Süßkraft von 20 Gramm bis 50 Gramm Saccharose entsprechenden Menge Süßstoff/Zuckeraustauschstoff oder Mischungen davon enthalten ist. Für die Ausgestaltung der Erfindung ist aber auch eine wesentlich konzentrierte oder deutlich verdünntere Anwendung denkbar. So ist es möglich, die für Schwangere und Stillende erforderliche Jodmenge von max. 190 µg täglich in einer einzigen Darreichung herzustellen, die in einer Menge Süßstoff / Zuckeraustauschstoff oder Mischungen davon der relativen Süßkraft von nur 1g oder weniger Rohrzucker enthalten ist; oder die 190 µg Jod sehr "verdünnt" in einer Menge Süßstoff / Zuckeraustauschstoff oder Mischungen davon zu verteilen, die einer relativen Süßkraft von beispielsweise 500 Gramm Saccharose oder mehr entspricht.

Für Saccharin (Natriumsalz) mit einer relativen Süßkraft gegenüber Rohrzucker von 500 (1) ergeben sich beispielsweise die folgenden Mengenverhältnisse:

Werden 70 µg lodid (x) mit der Menge Saccharin zubereitet, die 1 g Rohrzucker entspricht, müssen 91,5 µg Kaliumjodid (y1) oder 117,95 µg Kaliumjodat (y2) zu 2 mg Saccharin (z) zugemischt werden

| x µg Iodid | Rohrzuckeräquivalente | y1 µg Kaliumjodid | y2 µg Kaliumjodat | z mg Saccharin |
|---|---|---|---|---|
| 70 | 1 g | 91,5 | 117,95 | 2 |
| 70 | 500 g | 91,5 | 117,95 | 1000 |
| 190 | 1 g | 248,3 | 320,15 | 2 |
| 190 | 500 g | 248,3 | 320,15 | 1000 |
| 190 | 10 | 248,3 | 320,15 | 20 |
| 190 | 50 | 248,3 | 320,15 | 100 |

Für eine Mischung aus Cyclamat mit Saccharin im Verhältnis 10:1 mit einer relativen Süßkraft gegenüber Rohrzucker von 100 ergeben sich beispielsweise die folgenden Mengenverhältnisse:

| x µg Iodid | Rohrzucker-äquivalente | y1 µg Kaliumjodid | y2 µg Kaliumjodat | z mg Cyclamat/Saccharin im Verhältnis 10/1 |
|---|---|---|---|---|
| 70 | 1 g | 91,5 | 117,95 | 10 |
| 70 | 500 g | 91,5 | 117,95 | 5000 |
| 190 | 1 g | 248,3 | 320,15 | 10 |
| 190 | 500 g | 248,3 | 320,15 | 5000 |
| 190 | 10 | 248,3 | 320,15 | 100 |
| 190 | 50 | 248,3 | 320,15 | 500 |

### Beispiel 1

Herstellung von Süßstofftabletten, die in einem Rohrzuckeräquivalent von 10 g die Menge von 100 µg lodid enthält.

In einem geeigneten Mischer (z.B. Taumelmischer) werden zunächst 2,77 kg Natriumcarbonat (wasserfrei) mit 74,14 g Kaliumjodat 40 Min. bei 6 Umdrehungen / Minute (UPM) gemischt.
In einem größeren Mischer werden 40,0 kg Cyclamat, 4 kg Saccharin, 7,2 kg Lactose und 2.03 kg Weinsäure 10 Minuten bei 6 UPM gemischt. Dann wird die Mischung aus Natriumcarbonat und Kaliumjodat hinzugegeben und weitere 40 Minuten bei 6 UPM gemischt.

Die fertige Mischung wird in einem gängigen Tablettierungsverfahren zu Tabletten von 6 mm Durchmesser mit einem durchschnittlichen Gewicht von 56,75 mg verpreßt.

Eine Tablette enthält also 44 mg der Süßstoffmischung entsprechend einer Süßkraft von 4,4 g Rohrzucker und 44 µg lodid (berechnet aus 74,2 µg Kaliumjodat). Die tägliche Verwendung von 3 dieser Tabletten führt zu einer Jod-Supplementierung von 132 µg.

### Beispiel 2

Herstellung einer flüssigen Süßstoffzubereitung, die in einem Rohrzuckeräquivalent von 50 g die Menge von 100 µg lodid enthält.

In 5 Wasser werden 909 g Cyclamat, 91 g Saccharin und 337 mg Kaliumjodat gelöst. Die Lösung wird mit Wasser auf ein Endvolumen von 7,5 verdünnt.

Die Lösung enthält in 3,75 ml eine Süßstoffemenge, die der relativen Süßkraft von 50 g Rohrzucker entsprechen und 168,5 µg Kaliumjodat; entsprechend 100 µg Jod. Die so hergestellte Lösung kann zur mikrobiologischen Stabilisierung in bekannter Weise mit Konservierungsstoffen versetzt werden.

Darüber hinaus können in den erfindungsgemäßen Zubereitungen weitere für den Lebensmittelbereich übliche Zusatzstoffe wie z.B. Säuerungsmittel, Mineralstoffe, Geschmacksstoffe, Farbstoffe, Füllstoffe etc. enthalten sein, wie sie beispielsweise in der Zusatzstoff-verkehrsverordnung vom 10.7.1984 (BGBI. IS. 897) Liste 1 bis Liste 11 der Anlage 2 enthalten sind.

### Beispiel 3

Die Messung der Jodversorgung erfolgt über die Bestimmung der Jodausscheidung im Urin. Dazu wurde der Sammelurin über 48 Stunden herangezogen. In einem Cross -over Experiment wurde zunächst bei einem Probanden der Basiswert der Jodausscheidung über 48 Stunden gemessen. Dann erfolgte eine weitere Testphase, während der der Proband seine Getränke mit insgesamt 3 Süßstofftabletten aus Beispiel 1 gesüßt hat. Die Verwendung der Süßstofftabletten erfolgte einmal am Morgen, einmal am Mittag und einmal am Abend. Von der ersten Einnahme an wurde der Urin über insgesamt 48 Stunden gesammelt. In der dritten Testphase, verwendete der Proband 6,5 g jodiertes Kochsalz zum Zubereiten seiner Speisen über den Tag verteilt. Die Experimente wurden unter Einhaltung einer weitesgehend standardisierten Nahrungsmittelverwendung, die für das gesmte Experiment einzuhalten war, durchgeführt. Mit Ausnahme der letzten Testphase wurde nicht jodiertes Speisesalz verwendet.

Der Sammelurin einer jeden Testphase wurde gemischt, das Volumen bestimmt und in einem Aliquot der Jodgehalt bestimmt Zur Jodbestimmung wurde die Cer-Arsenit-Methode (4) O. Wawschinek, O. Eber, W. Petek, P. Wakonig u. A. Gürakar; Berichte der ÖGKC, 8, 1985, 13" angewandt.

Ergebnisse:

| | | |
|---|---|---|
| Basiswert | 2350 ml | 14,6µg/dl entspricht 343,1 µg/ 48h |
| | | |
| Süßstoffphase | 1950 ml | 22,5µg/dl entspricht 438,8 µg/ 48h bzw. plus 27,7%bezogen auf den Basiswert |
| | | |
| Phase mit jodiertem Speisesalz | 2100 ml | 17,6µg/dl entspricht 369,6µg/48h bzw. plus 7%bezogen auf den Basiswert |

## Patentansprüche

1. Süßstoffzubereitung zur Substitution ernährungsbedingter Joddefizite in fester oder flüssiger Form, bestehend aus einem oder mehreren Süßstoffen, ausgewählt aus der Gruppe, bestehend aus Cyclamat, Saccharin, Aspartam, Acesulfam und Salzen davon, und/oder einem oder mehreren Zuckeraustauschstoff(en), ausgewählt aus der Gruppe, bestehend aus Mannit, Sorbit, Xylit, Fruktose, Glucose und Mischungen davon, sowie Jod in Form anorganischer Jodverbindungen, ausgewählt unter Kaliumjodid, Natriumjodid, Kaliumjodat oder Natriumjodat und/oder Mischungen davon, und/oder in Form organischer Jodverbindungen, und optional weiteren Stoffen, ausgewählt aus der Gruppe, bestehend aus Säuerungsmitteln, Geschmacksstoffen, Konservierungsstoffen, Farbstoffen und Füllstoffen.

2. Süßstoff nach Anspruch 1, **dadurch gekennzeichnet, dass** er Mischungen aus Süßstoffen und Zuckeraustauschstoffen enthält.

3. Süßstoff nach Anspruch 1, **dadurch gekennzeichnet, dass** er einen oder mehrere Süßstoff(e) enthält.

4. Süßstoff nach Anspruch 1, **dadurch gekennzeichnet, dass** er einen oder mehrere Zuckeraustauschstoff(e) enthält.

5. Süßstoff nach Anspruch 1, **dadurch gekennzeichnet, dass** er Jod in Mengen enthält, die bei bestimmungsgemäßem oder üblichem Gebrauch es erlauben, Jod in Mengen von 1 µg bis 1000 µg, vorzugsweise 2 µg bis 300 µg zu dosieren.

6. Süßstoff nach Anspruch 1, **dadurch gekennzeichnet, dass** die organischen Jodverbindungen ausgewählt sind unter Monojodtyrosin und Dijodtyrosin.

## Claims

1. A sweetener preparation for supplementing alimentary iodine deficiencies in solid or liquid form, consisting of one or more sweeteners selected from the group consisting of cyclamate, saccharin, aspartame, acesulphame, and their salts, and/or one or more sugar substitutes selected from the group consisting of mannitol, sorbitol, xylitol, fructose, glucose and mixtures of these, as well as iodine in the form of inorganic iodine compounds selected from potassium iodide, sodium iodide, potassium iodate or sodium iodate and/or mixtures of these, and/or in the form of organic iodine compounds, and optionally other substances selected from the group consisting of acidifiers, flavourings, preservatives, colorants and fillers.

2. The sweetener as set forth in claim 1, **characterised in that** it contains mixtures of sweeteners and sugar substitutes.

3. The sweetener as set forth in claim 1, **characterised in that** it contains one or more sweetener(s).

4. The sweetener as set forth in claim 1, **characterised in that** it contains one or more sugar substitute(s).

5. The sweetener as set forth in claim 1, **characterised in that** it contains iodine in quantities which, when it is used properly or conventionally, allow iodine to be dosed in quantities of 1 µg to 1000 µg, preferably 2 µg to 300 µg.

6. The sweetener as set forth in claim 1, **characterised in that** the organic iodine compounds are selected from monoiodotyrosine and diiodotyrosine.

## Revendications

1. Préparation d'édulcorant pour substitution de déficit en iode nécessaire à l'alimentation, sous forme solide ou liquide, comprenant un ou plusieurs édulcorants sélectionnés parmi le groupe comprenant le cyclamate, la saccharine, l'Aspartame, l'Acesulfame et leurs sels, et/ou un ou plusieurs substituts de sucre, choisi parmi le groupe comportant le mannitol, le sorbitol, le xilitol, le fructose, le glucose et leurs mélanges, ainsi que l'iode sous forme de composés iodés inorganiques choisis parmi l'iodure de potassium, l'iodure de sodium, l'iodate de potassium ou l'iodate de sodium et/ou leur mélanges, et/ou sous forme de composés iodés organiques, et facultativement d'autres éléments sélectionnés parmi le groupe comprenant les acidifiants, les agents de saveurs, les conservateurs, les colorants et les charges.

2. Edulcorant selon la revendication 1, **caractérisé en ce qu'**il contient des mélanges d'édulcorants et de substituts de sucre.

3. Edulcorant selon la revendication 1, **caractérisé en ce qu'**il contient un ou plusieurs édulcorants.

4. Edulcorant selon la revendication 1, **caractérisé en ce qu'**il contient un ou plusieurs substituts de sucre.

5. Edulcorant selon la revendication 1, **caractérisé en ce qu'**il contient de l'iode en des quantités permettant dans une utilisation déterminée ou usuelle, de doser l'iode en des quantités de 1 µg à 1000 µg, de préférence 2 µg à 300 µg.

6. Edulcorant selon la revendication 1, **caractérisé en ce que** les composés iodés organiques sont choisis parmi la monoiodotyrosine et la diiodotyrosine.
